# EUROPEAN PATENT SPECIFICATION

(11) **EP 3 106 351 B1**
(45) Date of publication and mention of the grant of the patent: **31.10.2018**
(21) Application number: 15172019.0
(22) Date of filing: 15.06.2015
(51) Int. Cl.: B60R 9/058, F16B 39/10

(54) **A LOAD CARRIER FOOT**
LASTTRÄGERFUSS
PIED DE PORTE-CHARGE

(43) Date of publication of application: 21.12.2016
(73) Proprietor: Mont Blanc Industri AB, 516 90 Dalsjöfors (SE)
(72) Inventor: Olsén, Jonas, SE-514 44 LÄNGHEM (SE); Ekman, Daniel, SE-504 45 BORÅS (SE)
(74) Representative: AWA Sweden AB

(56) References cited:
- EP-A1- 0 110 035
- EP-A1- 2 746 108
- WO-A1-2010/148011
- JP-A- H08 268 173
- US-A1- 2012 228 348
- US-B1- 6 264 082

## Description

### Field of the Invention

The present invention relates to a load carrier foot for attaching a load carrier bar to a vehicle.

### Technical Background

The internal space for luggage in many vehicles are limited, thus a luggage carrier may be mounted to the roof of the vehicle. The luggage carrier for many vehicles comprises load bars which are arranged transversal to the driving direction of the vehicle. At each end of the load bars, a mounting foot is arranged. Each mounting foot comprises clamping elements, which clamps around mounting rails, which are fitted on the vehicle, or to the vehicle itself. The clamping elements are adjustable by an adjustable mechanism, for example a screw which is rotated until a suitable clamping force is achieved.

This is, for example, shown in EP2 746 108.
During use the luggage carrier is exposed to vibrations, which also may have an impact on the adjustable mechanism, which in a worst case scenario may result in that the luggage carrier disconnect from the vehicle.

Hence, there is a need for preventing the adjustable mechanism from becoming loose. Document EP 0 110 035 A1 discloses a load carrier foot for attaching a load carrier bar to a vehicle according to the preamble of claim 1.

### Summary of the Invention

The object of the present invention is to provide a load carrier foot for attaching a load carrier bar to a vehicle that overcomes the above issues.

The invention is based on the insight that by having a locking mechanism which locks the adjusting mechanism in a locked position and lets the adjusting mechanism to be used in an open position, it is prevented that the adjusting mechanism unlocks itself by, for example, vibrations from the vehicle.

The invention relates to a load carrier foot for attaching a load carrier bar to a vehicle, having the features of claim 1.

In order to arrange the load carrier foot to the vehicle and to adjust the clamping force or to remove the load carrier foot from the vehicle the elongated adjusting member has to be rotated. Due to the mated first and second engagement portions the elongated adjusting member cannot unintentional rotate. To be able to rotate the elongated adjusting member the second engagement portion of the locking member has to be separated from the first engagement portion of the elongated adjusting member. This can be done by moving at least a part of the locking member which comprises the second engagement portion away from the first engagement portion by using for example the hand or a tool.

According to at least one exemplary embodiment said attachment arrangement further comprises a pressing member, which is arranged to at least said locking member, said pressing member is adapted to press said locking member and said second engagement portion to mate with said first engagement portion of said elongated adjusting member. This way the first and the second engagement portions may always mate with each other and the elongated adjusting member cannot unintentional rotate. When the user decides to adjust the clamping force he/she needs to move the first and the second engagement portion away from each other to the open position, by applying a force on the locking member, before the elongated adjusting member can be rotated. The pressing member automatically forces the locking member into the closed position when the force is removed. The pressing member may be a separate part or it may be integrated with, for example, the locking member. The force may be applied by using a hand or a tool. Said pressing member may be considered being a spring.

According to at least one exemplary embodiment said pressing member is an elastic ring-shaped member arranged around said locking member and said elongated adjusting member, wherein said elastic ring-shaped member presses said second engagement portion of said locking member and said first engagement portion of said elongated adjusting member to mate, and said elastic ring-shaped member is stretchable, and when being stretched it allows said second engagement portion of said locking member and said first engagement portion of said elongated adjusting member to separate and to move to the open position wherein said elongated adjusting member is rotatable.

By having an elastic ring-shaped member which always presses the second engagement portion of the locking member into contact with the first engagement portion of the elongated adjusting member it is ensured that the elongated adjusting member cannot unintentionally rotate, and hence unlock itself by vibrations from the vehicle. The elastic ring-shape member may, for example be an o-ring. The shape of the elastic ring-shaped element may be of an O or have any other suitable ring-formed shape. The inner circumference of the ring-shaped member is preferably smaller than the outer circumference of the connected locking member and the elongated adjusting member it is arranged around. To be able to rotate the elongated adjusting member the second engagement portion of the locking member has to be separated from the first engagement portion of the elongated adjusting member and the elastic ring-shaped element has to be stretched since the ring-shaped element keeps the locking member into contact with the elongated adjusting member. With other words, said attachment arrangement comprises an elastic ring-shaped member, which is arranged around said locking member and said elongated adjusting member, wherein said elastic ring-shaped member presses said second engagement portion of said locking member and said first engagement portion of said elongated adjusting member to mate, and said elastic ring-shaped member is stretchable, and when being stretched it allows said second engagement portion of said locking member and said first engagement portion of said elongated adjusting member to separate and to move to the open position wherein said elongated adjusting member is rotatable.

According to at least one exemplary embodiment said pressing member is a spring, and said spring is adapted to be compressed or stretched when said second engagement portion of said locking member and said first engagement portion of said elongated adjusting member is in said open position. The spring may be a metal spring. The metal spring may be a flat spring, i.e. a leaf spring integrated with or attached to the locking member at one end. The other one end of the leaf spring may be resting on the clamping member, and pressing the locking member towards the elongated adjusting member. The leaf spring may be compressed when the first and the second engagement portions are in the open position. Alternatively, the spring may be a metal wire, which is arranged at least partly around the locking member and the elongated adjusting member. The metal wire presses the first and the second engagement portions together so they mate. The metal wire may have a shape which allows the metal wire to stretch when the first and the second engagement portions moves to an open position and which automatically presses the portions to the closed position.

According to at least one exemplary embodiment said pressing member is a spring member arranged at least partly around said locking member and said elongated adjusting member, and a portion of said spring member is resiliently contacting said locking member and/or said elongated adjusting member.

According to at least one exemplary embodiment said first engagement portion of said elongated adjusting member extends in an angle to a central axis of said elongated adjusting member.

According to at least one exemplary embodiment the angle is substantially perpendicular to the central axis. The first engagement portion may be a protrusion, which at least partly protrude from the outer periphery of the elongated adjusting member in an angle to the centre axis of the elongated adjusting member. The angle may be substantially perpendicular to the central axis. Alternatively, the first engagement portion may be a recess, which at least partly extends from the outer periphery of the elongated adjusting member towards the centre axis of the elongated adjusting member and it may extend in an angle to the centre axis of the elongated adjusting member. The angle may be substantially perpendicular to the central axis.

According to at least one exemplary embodiment the first engagement portion may have a cross-section which is rectangular or square shaped and the cross-section may be in a right angle to the centre axis. The second engagement portion may have a matching shape.

According to at least one exemplary embodiment several first engagement portions are evenly distributed around the periphery of said elongated adjusting member. By having several first engagement portions there will always be a first engagement portion, which the second engagement portion of the locking member can interact with.

According to at least one exemplary embodiment said first engagement portion of said elongated adjusting member comprises two engagement protrusions forming a recess there between and said second engagement portion of said locking member is a protrusion protruding from said locking member and said protrusion is adapted to be received in said recess. The two engagement protrusions preferably extend from the outer periphery of the elongated adjusting member perpendicular to the centre axis of the elongated adjusting member. That is, each engagement protrusion protrudes from the elongated adjusting member. If there are several first engagement portions arranged around the elongated adjusting member one of the two engagement protrusions may with a further similar protrusion form a second first engagement portion. If the elongated adjusting member comprises a head, the engagement protrusions may extend from the outer periphery of the head of the elongated adjusting member.

According to at least one exemplary embodiment said first engagement portion of said elongated adjusting member is at least one recess in said elongated adjusting member and said second engagement portion of said locking member is a protrusion protruding from said locking member and said protrusion is adapted to be received in said at least one recess.

According to at least one exemplary embodiment said first engagement portion of said elongated adjusting member is at least one engagement protrusion and said second locking portion of said locking member is a recess in said locking member and said engagement protrusion is adapted to be received in said recess. The engagement protrusion preferably extends from the outer periphery of the elongated adjusting member perpendicular to the centre axis of the elongated adjusting member. That is, each engagement protrusion protrudes from the elongated adjusting member. If the elongated adjusting member comprises a head, the engagement protrusion may extend from the outer periphery of the head of the elongated adjusting member.

According to at least one exemplary embodiment said elongated adjusting member comprises a tool engaging area at said second area of said elongated adjusting member, said first engagement portion is arranged adjacent said tool engaging area, and said tool engaging area is arranged inside said locking member and at least partly covered by said locking member, and said locking member is adapted to move from said closed position to said open position when a tool, for adjusting said clamping force, is inserted into said tool engaging area, wherein said tool pushes said locking member at least partly away from said elongated adjusting member into said open position. By having the tool engaging area partly covered by the locking member, the tool when being inserted, forces the locking member away from the tool engaging area and away from the elongated adjusting member and into an open position. The tool engaging area is preferably arranged in the longitudinal direction of the elongated adjusting member at the end of the elongated adjusting member at said second area.

The tool engaging area may have the shape of the following type: slot, bolt, pozidriv, square, Robertson, torx or secure torx, hex socket or allen key, security hex, Phillips, square double, triple double, polydrive, spline drive, double hex, Bristol or pentalobular or any other possible design. This way a standard tool, for example, a screw driver may be used. By having a tool for moving the locking member to the open position unnecessary adjustments may be prevented.

According to at least one exemplary embodiment said elongated adjusting member comprises a head with a tool engaging area at said second area of said elongated adjusting member, said first engagement portion is arranged adjacent said head or is part of said head, and said head and said tool engaging area is arranged inside said locking member and at least partly covered by said locking member, and said locking member is adapted to move from said closed position to said open position when a tool, for adjusting said clamping force, is inserted into said tool engaging area, wherein said tool pushes said locking member at least partly away from said elongated adjusting member into said open position. By having a head with a tool engaging area the head may be larger than the rest of the elongated adjusting member, in order to provide a larger tool engaging area for receiving a tool. The tool engaging area may have the shape of the following type: slot, bolt, pozidriv, square, Robertson, torx or secure torx, hex socket or allen key, security hex, Phillips, square double, triple double, polydrive, spline drive, double hex, Bristol or pentalobular or any other possible design. This way a standard tool, for example, a screw driver may be used. By having the tool engaging area partly covered by the locking member the tool when being inserted, forces the locking member away from the tool engaging area and away from the elongated adjusting member and into an open position.

According to at least one exemplary embodiment said elongated adjusting member is a screw or a bolt.

According to at least one exemplary embodiment said attachment arrangement further comprises a pin member, said pin member comprises a hole through which said elongated adjusting member extends and said pin member is arranged between said first engagement portion of said elongated adjusting member and said clamping member. The pin member supports the elongated adjusting member and allows it to pivot on the clamping member and apply a force on the clamping member.

According to at least one exemplary embodiment said locking member is pivotably arranged to said pin member by matching connecting elements. By having the locking member pivotably attached it is always connected to the attachment arrangement, i.e. both in the closed position and in the open position. The matching connecting elements may for example be openings in the locking member, which is hold in place by protrusions on the pin member or the other way around. The locking member and the pin member may further be pre-assembled before they together are mounted to the load carrier foot.

According to at least one exemplary embodiment said locking member comprises
- a tool receiving portion adapted to at least partly cover a portion of said tool engaging area,
   and
- optionally a pin member receiving portion which is adapted to receive said pin member. The tool receiving portion may be an end portion of the locking member with an opening. Through the opening a tool is adapted to be inserted, before it is inserted into the tool engaging area of the elongated adjusting member in order to rotate the elongated adjusting member. The locking portion may be adapted to be arranged partly around the circumference of the first engagement portions of the elongated adjusting member. The locking portion comprises said second engagement portion, which may be a protrusion or a recess. The first engagement portion of the elongated adjusting member is adapted to be arranged in the locking portion. The locking member may further comprise a pin member receiving portion, which is adapted to be attached to the pin member. The pin member receiving portion may be arranged adjacent to the locking portion. The pin member receiving portion of the locking member may have an inner shape which match with a part of the pin member. The pin member may comprise holes at each side, which match with pivot portions on the pin member. By having the portions partly arranged around the elongated adjusting member, the elongated adjusting member can easily be inserted into the locking member.

According to at least one exemplary embodiment said locking member may further comprise a holding portion on the outer surface of the locking member adapted to hold the pressing member in place. The holding portion maybe a protrusion, which keeps the pressing member, for example, an elastic ring shaped member or a metal wire in place.

According to at least one exemplary embodiment said locking member further comprises a head receiving portion adapted to partly surround the circumference of said head of said elongated adjusting member. From the tool receiving portion a head receiving portion may extend and it may have a U-shaped cross-section which at the bottom essentially corresponds with the outer periphery of the head of the elongated adjusting member. The head receiving portion may be adapted to surround a part of the outer periphery of the head of the elongated adjusting member if it has a head. It may be U-shaped in order to easily arrange the elongated adjusting member therein. The rounded bottom may have a radius which is slightly larger than the radius of the head. An axis B may extend through the centre of the rounded bottom. The tool receiving portion may have an opening, which also is U-shaped and it may comprise an axis C at the centre point of the rounded bottom. The axis B and the axis C preferably extends in the same direction. The U-shaped opening and the inner U-shaped head receiving portion may be arranged essentially above and parallel to each other with their bottoms facing in the same direction, but with the axis C of the opening arranged at a distance from the axis B of the head receiving portion. The head receiving portion may be arranged between the tool receiving portion and the locking portion.

According to at least one exemplary embodiment said attachment arrangement further comprises a positioning plate, which is adapted to be arranged on said elongated adjusting member. The positioning plate may be adjustably positioned on the elongated adjusting member to position said first and second engagement portion relative the clamping member. The positioning plate is preferably a flat metal plate.

According to at least one exemplary embodiment said positioning plate comprises an opening which allows a threaded area of the elongated adjusting member to be arranged into.

According to at least one exemplary embodiment said positioning plate comprises tongues which are adapted to be received between two thread tops of said threaded area of the elongated adjusting member. The tongues may be in an angle to the rest of the positioning plate if the positioning plate is a flat positioning plate. The tongues may then guide the elongated adjusting member into the opening in the positioning plate. The tongues allow the positioning member to be screwed onto the elongated adjusting member or to pressed onto the threaded area of the elongated adjusting member. The positioning plate may be pressed on the elongated adjusting member if the tongues are allowed to bend slightly and return to their position.

According to a second aspect of the invention there is provided an attachment arrangement comprising- an elongated adjusting member, comprising a threaded area at a first area of said elongated adjusting member and an opposite arranged second area, said elongated adjusting member comprises a first engagement portion arranged at said second area, said first engagement portion is arranged at the periphery of said elongated adjusting member, and- a locking member arranged at least partly around said second area of said elongated adjusting member and its first engagement portion, wherein said locking member comprises a second engagement portion matching said first engagement portion of said elongated adjusting member, wherein said second engagement portion of said locking member and said first engagement portion of said elongated adjusting member are adapted to mate in a locked position, wherein said elongated adjusting member is prevented from rotating, and said second engagement portion of said locking member and said first engagement portion of said elongated adjusting member are adapted to be separated in an open position, wherein said elongated adjusting member is rotatable. The features of the attachment arrangement described above in relation to the load carrier foot also apply for the attachment arrangement alone. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows a roof rack with a load carrier foot in perspective.
Fig. 2 shows the cross-section I-I of the load carrier foot in Fig. 1, with a rail of a vehicle.
Fig. 3 shows the load carrier foot in Fig. 1 in perspective with the attachment arrangement enlarged and exploded from the load carrier foot and with different views of the locking member.
Fig. 4 shows the cross-section II-II in Fig. 6a of the attachment arrangement in a locked position.
Fig. 5 shows the cross-section III-III in Fig. 6b of the attachment arrangement in an open position.
Fig. 6a shows the cross-section I-I in Fig. 1 in perspective of the attachment arrangement shown in Figs. 1-3 in a locked position.
Fig. 6b shows the attachment arrangement in Fig 6a in an open position and how it is moved to the open position.
Fig. 6c shows how the attachment arrangement in Fig 6b is moved back to a locked position.
Fig. 7 shows an alternative embodiment of the elongated adjusting member in the attachment arrangement shown in Figs. 1-6c.
Fig. 8 shows the cross-section II-II in Fig. 6a with an alternative embodiment of the second engagement portion of the locking member in the attachment arrangement.
Fig. 9 shows the locking member in Figs. 1- 8 with an alternative embodiment of the pressing member.
Fig. 10a shows the load carrier foot in Figs. 1-3 in perspective with an alternative embodiment of the locking member.
Fig. 10b shows the locking member in Fig 10a.
Fig. 11 shows the locking member in Figs. 1- 8 with an alternative embodiment of the pressing member.

All the figures are highly schematic, not necessarily to scale, and they show only parts which are necessary in order to elucidate the invention, other parts being omitted or merely suggested.

### Detailed Description of Exemplary Embodiments

An embodiment of the invention will be described in more detail in the following with reference to the accompanying drawings.

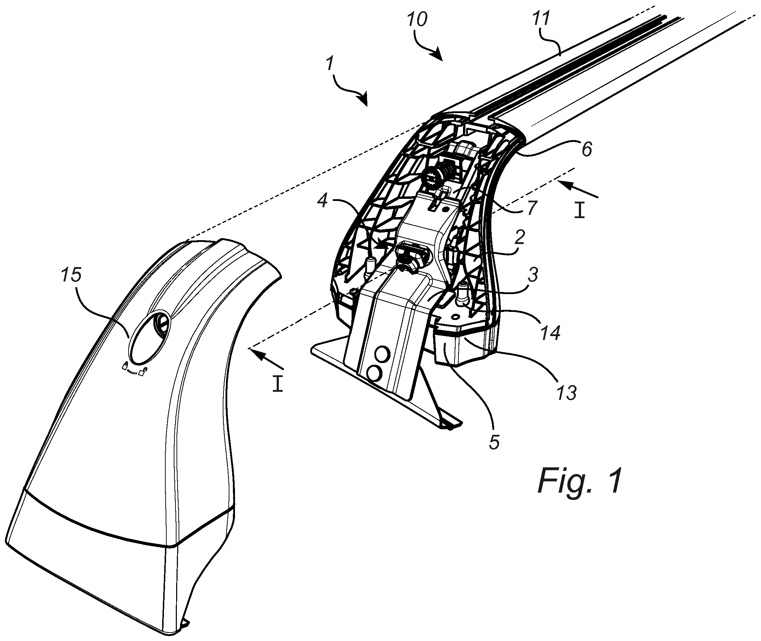

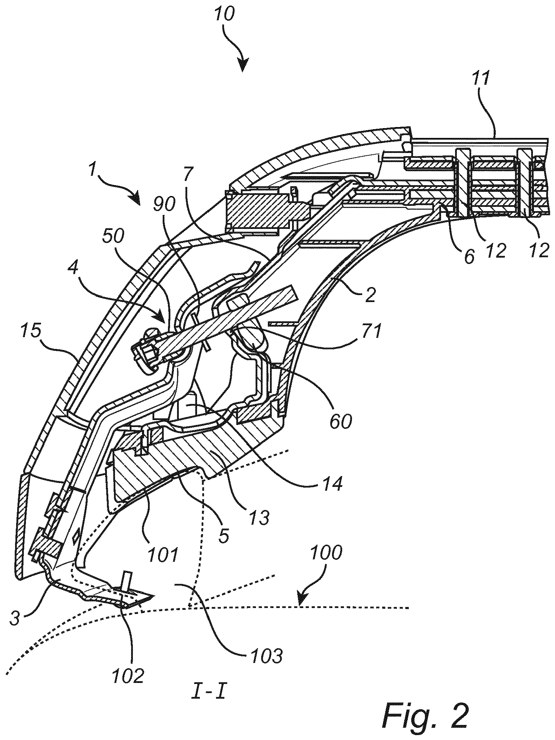

Fig. 1, Fig. 2 and Fig. 3 show a part of a roof rack 10, where Fig. 2 shows the cross section I-I in Fig 1 from the side. Fig. 1, Fig 2 and Fig. 3 are hence described together. The roof rack 10 comprises a load carrier bar 11 with a load carrier foot 1 on both ends of the load carrier bar (only one load carrier foot is shown in Fig. 1, Fig. 2 and Fig 3). The second load carrier foot may have the same design as the one shown or it may differ. To the load carrier bar 11 articles, such as roof boxes, bikes, skies etc. may be securely attached. The load carrier foot 1 establish a detachable connection to the vehicle.

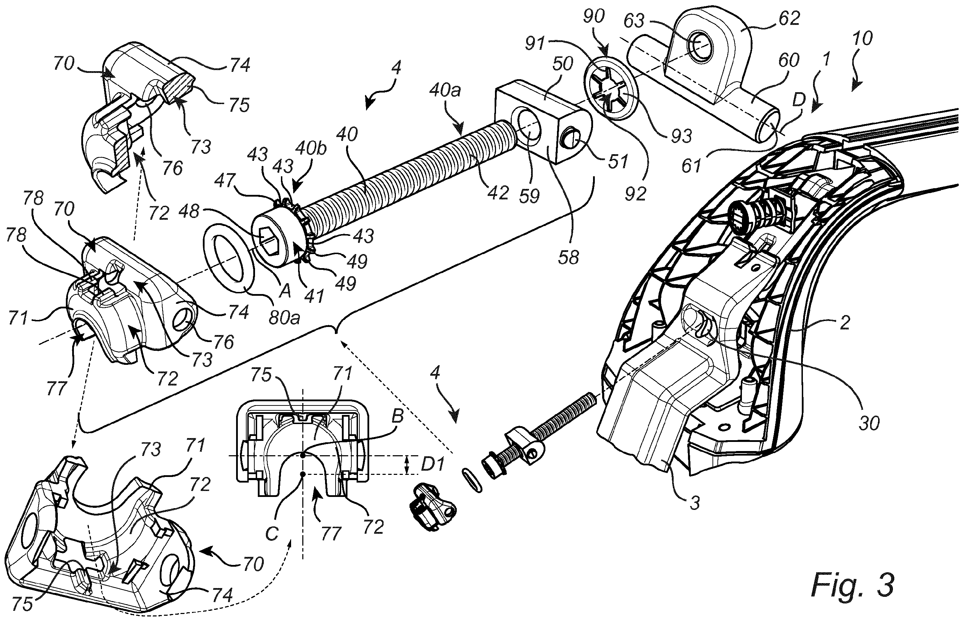

The load carrier foot 1 comprises a body 2, a removable and lockable lid 15, a clamping member 3 and an attachment arrangement 4. The removable and lockable lid 15 is removed from the load carrier foot 1 in Fig. 1 and Fig. 3.

The body 2 of the load carrier foot 1 comprises a support surface 5, which is adapted to rest against a surface 101 of the vehicle 100, preferably a rail 103 of the vehicle 100 (see Fig. 2). The support surface 5, is part of a support element 13, which is a separate part fixedly connected to the bottom portion of the body 2 by flexible connecting members 14, which snaps into place in openings in the body 2. The connecting members 14 may however be other kinds of connecting members. The support surface 5 is advantageously made by a rubber like material to provide high friction yet a lenient surface towards the surface of the vehicle.

The body 2 further comprises a load carrier bar receiving area 6 onto which the load carrier bar 11 is arranged and fixed by fastening means 12.

The clamping member 3 is a bracket, which is adapted to cooperate with a connecting member 7, which is also fixedly connected, by the fastening means 12 to the upper area of the body 2. The clamping member 3 may be made by in one piece or by several parts connected together. The fastening means 12 may, for example, be blind rivets 12. The connecting member 7 may be considered being comprised in the body 2. The clamping member 3 is adapted to rest on a second surface 102 of the vehicle 100, which second surface 102 is arranged essentially opposite the surface 101 to which said support surface 5 is adapted to rest on (see Fig. 2).

The attachment arrangement 4 connects the clamping member 3 with the connecting member 7, i.e. with the body 2. The attachment arrangement 4 is adapted to provide a clamping force between the support surface 5 of the body 2 and the clamping member 3. The mounting of the load carrier 10 is done by arranging the support surface 5 against the surface 101 of the vehicle 100 and arranging the clamping member 3 to the opposite surface 102 and by using the attachment arrangement 4 clamp the two parts together.

The clamping member 3 and the connecting member 7 can be manufactured from sheet metal such as sheet steel, or any suitable composite or resin based material.

The attachment arrangement 4 comprises an elongated adjusting member 40, a locking member 70 and an elastic ring-shaped member 80a and a pin member 50 (see Fig. 3). The elongated adjusting member 40 is an elongated at least partly threaded member. The elongated adjusting member 40 comprises a first and a second area 40a, 40b. At the first area 40a the elongated adjusting member 40 is provided with a threaded portion 42. A head 41 is arranged in the second area 40b of the elongated adjusting member 40. The threaded portion 42 may extend along essential the whole length of the elongated adjusting member 40 to said head 41, may however comprise portions without any threads. The elongated adjusting member 40 is exemplified as a screw having head, may however be a bolt or a screw without a head. It can be made from metal, such as steel, or any suitable composite or resin based material.

The clamping member 3 comprises an aperture 30 through which the elongated adjusting member 40 extends. The aperture 30 may be an elongated aperture 30, which may enable the elongated adjusting member 40 to be positioned in at least two positions, so that the load carrier foot 1 can be easily mounted and dismounted.

The pin member 50 has an elongated shape having a D-shaped cross-section. The pin member 50 is however not limited to having a D-shaped cross-section, it may have any other suitable cross-section. An aperture 59 extends from the flat side 58 of the D-shaped pin member 50 and perpendicular to the flat side 58 through the pin member 50. At each opposite end of the elongated pin member 50 protrudes a pivot portion 51. The elongated adjusting member 40 extends through the aperture 59. The pin member 50 is arranged between the head 41 of the elongated adjusting member 40 and the clamping member 3. The pin member 50 is arranged such that the elongated adjusting member 40 extends through the pin member 50 so that the pin member 50 extends substantially perpendicular to the elongated adjusting member 40. The head 41 of the elongated adjusting member abuts the flat side 58 of the pin member 50.

The threaded portion 42 of the elongated adjusting member 40 threadedly engages a clamping pin 60, which is arranged such that the clamping member 3 and the connecting member 7 are arranged between the pin member 50 and the clamping pin 60. Hence, the connecting member 7 comprises an opening 71 through which the elongated adjusting member 40 extends. The clamping pin 60 comprises a round pin body 61 with a connecting portion 62 extending perpendicular to the pin body 61. The connecting portion 62 is arranged essentially in the middle of the pin body 61 and comprises a threaded aperture 63, which said threaded portion 42 engages. The threaded aperture 63 is arranged a distance from the centre axis D of the pin body 61. The pin body 61 of the clamping pin 60 pivotally connects the elongated adjusting member 40 to the body 2 via the connecting member 7, which is arranged between the clamping member 3 and the clamping pin 60.

At the head 41 at the second area 40b of the elongated adjusting member 40 several first engagement portions 43 are arranged (see Fig. 3). The first engagement portions 43 are formed by engagement protrusions 49, which each protrudes from the periphery of the head 41. One first engagement portions 43 is formed by two engagement protrusions 49 having a space between them. Each engagement protrusion 49 protrudes perpendicular to an axis A of said elongated adjusting member 40 from the outer periphery of the head 41. Together with the head they form a flange 47, which is adjacent the threaded portion 42. The first engagement portions 43 are evenly distributed around the periphery of the head 41. The engagement protrusions 49 does not have to protrude from the head, they may protrude a distance from the head and hence protrude from a body portion of the elongated adjusting member 40. The head 41 comprises twelve first engagement portions 43 may however be less or more. A tool engaging area 48 is arranged in the head 41, and the tool engaging area 48 protrudes into the head 41 in the direction of the centre axis A. The tool engaging area 48 may have the shape of the following type: slot, bolt, pozidriv, square, Robertson, torx or secure torx, hex socket or allen key, security hex, Phillips, square double, triple double, polydrive, spline drive, double hex, Bristol or pentalobular or any other possible design. This way a standard tool, for example, a screw driver may be used.

The locking member 70 is partly arranged around said second area 40b of said elongated adjusting member 40. The locking member 70 comprises a tool receiving portion 71, a head receiving portion 72, a locking portion 73 and a pin member receiving portion 74. The tool receiving portion 71 is an end portion with an opening 77, through which a tool is adapted to be inserted, before it is inserted into the tool engaging area 48 of the elongated adjusting member 40 in order to rotate the elongated adjusting member 40. From the tool receiving portion 71, the head receiving portion 72 extends and it has an inner U-shaped shape which at the bottom essentially corresponds with the outer periphery of the head 41 of the elongated adjusting member 40. The head receiving portion 72 is adapted to surround a part of the outer periphery of the head 41. The inner shape is U-shaped in order to easily arrange the elongated adjusting member 40 therein. The rounded bottom of the head receiving portion 72 has a radius which is slightly larger than the radius of the head. An axis B extends through the centre of the rounded bottom of the head receiving portion 72. The opening 77 of the tool receiving portion 71 is also U-shaped and comprises an axis C at the centre point of the rounded bottom. The axis B and the axis C extend in the same direction. The U-shaped opening 77 and the inner U-shaped head receiving portion 72 are arranged essentially parallel to each other with their bottoms facing in the same direction. Their axes are centrally arranged through the locking member 70, but with the axis C of the opening 77 arranged at a distance D1 from the axis B of the head receiving portion 72. The head receiving portion 72 is arranged adjacent to the locking portion 73. The locking portion 73 is adapted to be arranged partly around the circumference of the first engagement portions 43 of the elongated adjusting member 40. The locking portion 73 comprises a second engagement portion 75, which is a protrusion 75 extending in a direction towards the axis B of the head receiving portion 72. In the locking portion 73 the first engagement portions 43 of the elongated adjusting member 40 are adapted to be arranged. The second engagement portion 75 is matching with the first engagement portions 43 of the elongated adjusting member 40. The locking member 70 further comprises a pin member receiving portion 74 which is adapted to be arranged to the pin member 50. The pin member receiving portion 74 is arranged adjacent to the locking portion 73.

The pin member receiving portion 74 of the locking member 70 has an inner shape which match with a part of the pin member 50 and it comprises holes 76 at each side, which match the pivot portions 51 on the pin member 50.

The locking member 70 is pivotably attached to the pin member 50 through the holes 76 and the pivot portions 51. The head 41 of the elongated adjusting member 40 is arranged so that it is in contact with the flat side 52 of the D-shaped pin member 50 and the body of the elongated adjusting member 40 extends through the opening 59 in the pin member 50. The head receiving portion 72 of the locking member 70 is partly arranged around the head 41 and the locking portion 73 is partly arranged around the engagement portions 43.

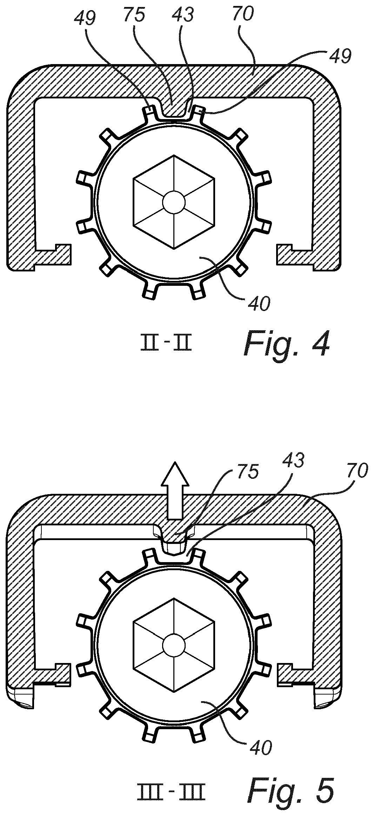

Around the locking member 70 and the head 41 of the elongated adjusting member 40 is a pressing element 80a arranged. The pressing element is exemplified as an elastic ring-shaped member 80a. The ring-shaped member may be an o-ring. The shape of the elastic ring-shaped element 80a may be of an O or have any other suitable ring-formed shape. The inner circumference of the ring-shaped member 80a is a smaller than the outer periphery of the connected locking member 70 and the head 41, in order to press said second engagement portion 75 into contact with one of the first engagement portions 43, i.e. between two engagement protrusions 49. The locking member 70 and the elongated adjusting member 40 are in a locked position where the elongated adjusting member 40 cannot be rotated. This is also shown in Fig. 4. A part of the tool receiving portion 71 of the locking member 70 is covering the tool engaging area 48 of the elongated adjusting element 40. That is, the opening 77 of the tool receiving portion 71 is not arranged to allow direct access to the tool engaging area 48. On the outer surface of the locking member 70 two holding portions 78 are arranged. They hold the elastic ring-shaped element 80a in place on the locking member 70. The ring-shaped element 80a may then be secured by being placed between the two holding portions 78 and the locking portion 73. The locking portion 73 has a larger outer contour than the head receiving portion 72.

Between the clamping member 3 and the connecting member 7 is a positioning plate 90 arranged. The positioning plate 90 is arranged on the elongated adjusting member 40. The positioning plate 90 positions the head 41 of the elongated adjusting member 40, the locking member 70 and the pin member 50 relative the clamping member 3 and may prevent that the whole attachment arrangement 4 rotates when the foot 1 shall be attached to the vehicle. The positioning plate 90 may be part of the attachment arrangement 4. The positioning plate 90 is a round flat metal plate. The positioning plate 90 comprises an opening 92 which allows the threaded area of the elongated adjusting member 40 to be arranged into. The positioning plate 90 comprises tongues 93 which are arranged at a distance 91 from each other around the opening. The opening 92 hence gets a shape of a star. The tongues 93 are adapted to be received between two thread tops of said threaded portion 42 of the elongated adjusting member 40. The tongues 93 are arranged in an angle to the rest of the positioning plate 90. The bent tongues 93 guide the elongated adjusting member 40 into the opening 92 in the positioning plate 90. The tongues 93 also allows the elongated adjustment member 40 to be screwed into the positioning plate 90 or to pressed into it, since the tongues 93 may bend and return to its original position.

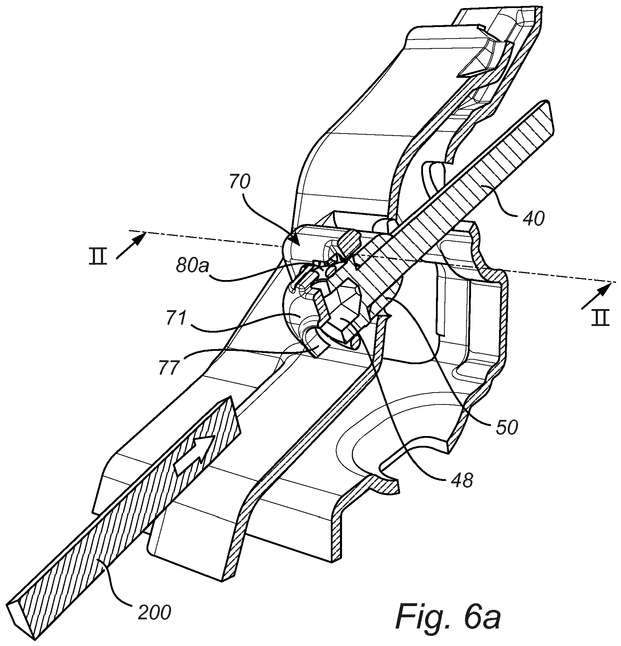

Fig. 4 shows the locking member 70 and the elongated adjusting member 40 in a locked position, at the cross-section II-II in Fig. 6a. The second engagement portion 75 of said locking member 70 is mated with one of the said first engagement portions 43 of the elongated adjusting member 40, due to the elastic ring-shaped member 80a (see Fig. 6a) which presses the locking member 70 towards the elongated adjusting member 40. That is, the second engagement portion 75 is received between two engagement protrusions 49. The elongated adjusting member 40 is hence prevented from rotating, by the second engagement portion 75.

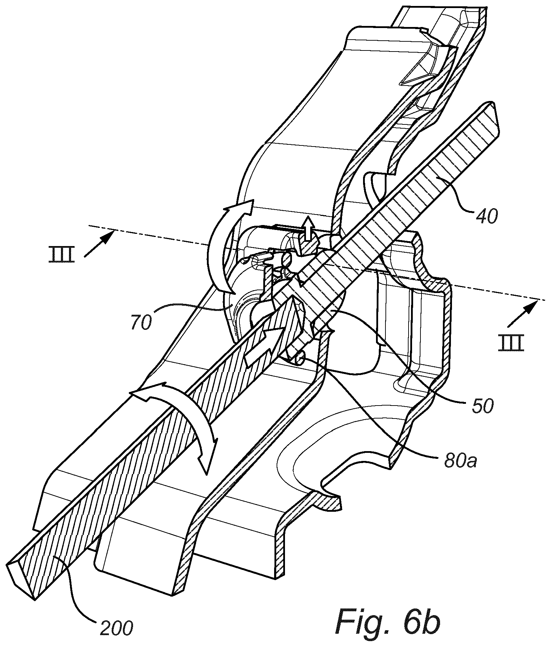

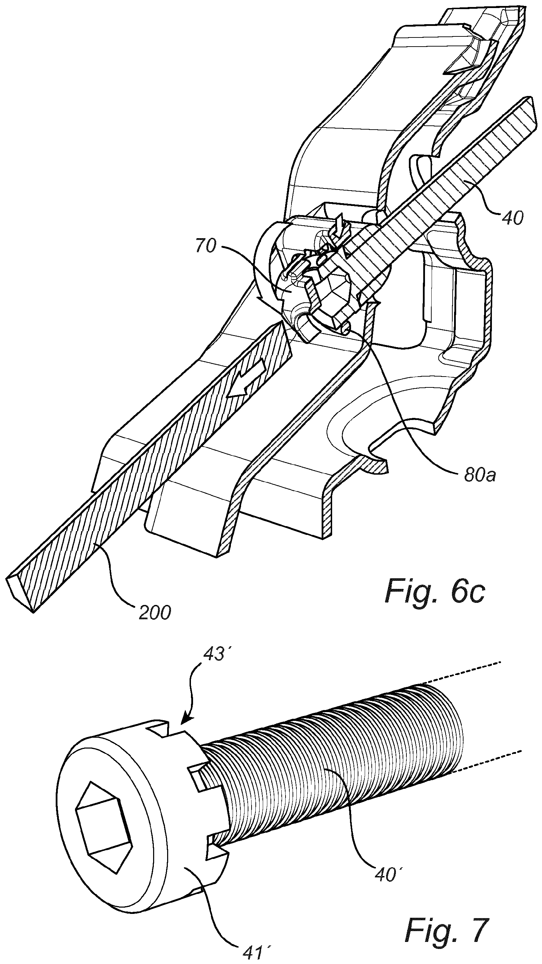

Fig. 5 shows the locking member 70 and the elongated adjusting member 40 in an open position at the cross-section III-III in Fig. 6b. The second engagement portion 75 of said locking member 70 is separated from the first engagement portions 43 of the adjusting member 40. This is be done by stretching the elastic ring-shaped member 80a (see Fig. 6b), which presses the locking member 70 towards the elongated adjusting member 40. Figs. 6a, 6b, 6c show how this can be done.

Fig. 6a shows the locking member 70 and the elongated adjusting member 40 in a locked position as in Fig. 4 and will hence not be further described. A tool 200 is moving towards the tool receiving portion 71 of the locking member 70 and the tool receiving area 48 of the elongated adjusting member 40. The tool 200 is to be inserted into the opening 77 of the tool receiving portion 71 of the locking member 70. The elastic ring-shaped member 80a presses the locking member 70 and the elongated adjusting member 40 together.

In Fig. 6b the tool 200 has pushed the locking member 70 away from the elongated adjusting member 40 and thereby stretched the elastic ring-shaped member 80a. This was done when the tool 200 was inserted through the opening 77 (see Fig. 6a) of the locking member 70.The locking member 70 has been pivoted around the pin member 50. The locking member 70 has hence moved relative the elongated adjusting member 40 from a locked position to an open position.

The locking member 70 and the elongated adjusting member 40 are now in an open position, also shown and described in connection with Fig. 5. The tool 200 can rotate the elongated adjusting member 40 and hence vary the clamping force.

Fig. 6c shows the locking member 70 and the elongated adjusting member 40 in a locked position, after the tool 200 have been removed. The elastic ring-shaped element 80a pushes the locking member 70 back into contact with the elongated adjusting member 40, when the tool 200 has been removed. The elongated adjusting member 40 cannot accidently rotate, by for example vibration from the vehicle. There might be cases when a top of one engagement protrusions 49 of the first engagement portion 43 and the top of second engagement portion 75 are arranged in contact with each other after the tool has been removed. When the elongated adjusting member 40 is moved slightly, for example by vibrations of the vehicle the first engagement portion 43 will automatically move into a correct position and mate with the second engagement position 75 and prevent rotation.

Fig. 7 shows an alternative embodiment of the elongated adjusting member 40'. Instead of having protrusions 49 extending from the head of the elongated adjusting member 40 as described in connection with Figs. 1-6 the first engagement portions 43 are recesses 43' in the head 41' of the elongated adjusting member 40'.

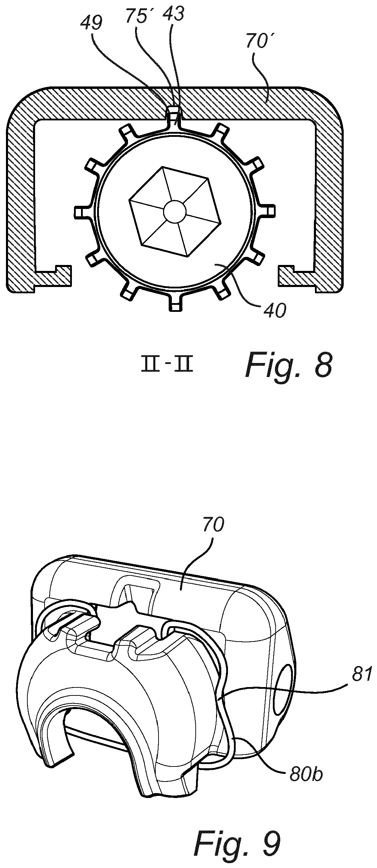

Fig. 8 shows an alternative embodiment of the second engagement portion 75 of the locking element 70 shown in the cross-section II-II of Fig. 6a. The second engagement portion 75' in the locking element 70' is a recess instead of a protrusion as in Figs. 1-7. The elongated adjusting member 40 is similar to the elongated adjusting member 40 described in connection with Figs. 1-6, except that the first engagement portions 43 is one of the engagement protrusions 49.

Fig. 9 shows the locking element 70 in Figs. 1-8, with an alternative pressing element 80b. It is a spring made of a metal wire 80b. The metal wire spring surrounds at least partly the locking member 70 and the elongated adjusting member (not shown) and is adapted to press the first and the second engagement portions to mate in a similar way as described in connection with Figs. 1-6c. The metal wire spring 80b has on each side of the locking member 70 a V-shaped portion 81, which allows the metal wire spring to stretch when the first and the second engagement portions moves to an open position and forces them automatically return to the closed position after the tool has been removed. The V-shaped portion is resilient. The spring 80b is not limited to have two v-shape bends on two sides. The spring may have only one V-shaped portion or several V-shaped portions and they may be U-shaped. They are also not limited to be arranged on the sides of the locking member 70.

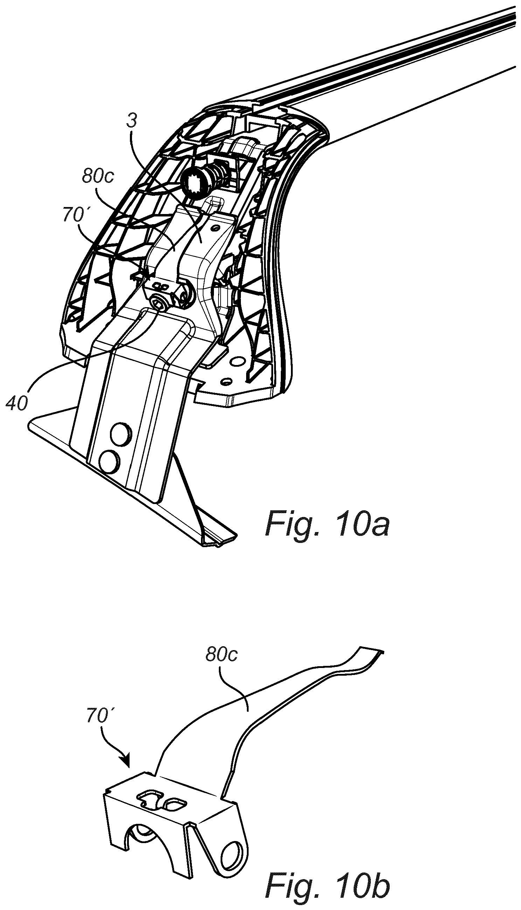

Fig. 10a shows the load carrier foot 1 in Figs. 1-3 with an alternative locking member 70'. Fig. 10b shows the locking member 70'. The locking member 70' comprises similar portions (not shown) as the locking member 70, i.e. a tool receiving portion 71, a head receiving portion 72, a locking portion 73 and a pin member receiving portion 74 described in connection with Fig. 1-3 and with the exception that the head receiving portion 72 does not comprise an inner U-shape. The portions of the locking member 70' will hence not be further described. The locking member 70' is exemplified as being a one piece metal plate which has been bent to a desired shape, may however be made in any other suitable way. The locking member 70' comprises an integrated pressing element 80c in the shape of a leaf spring. The leaf spring 80c may however be a separate leaf spring connected to the locking member 70'. One end of the leaf spring 80c is attached to the pin receiving portion 74'. The other one end of the leaf spring 80c rests, during use on the clamping member, 3 and presses the locking member 70' towards the elongated adjusting member 40. The leaf spring 80c is being compressed when the first and the second engagement portions are in the open position. When the tool is removed (see Fig. 6c) the leaf spring 80c automatically presses the locking member to the locked position.

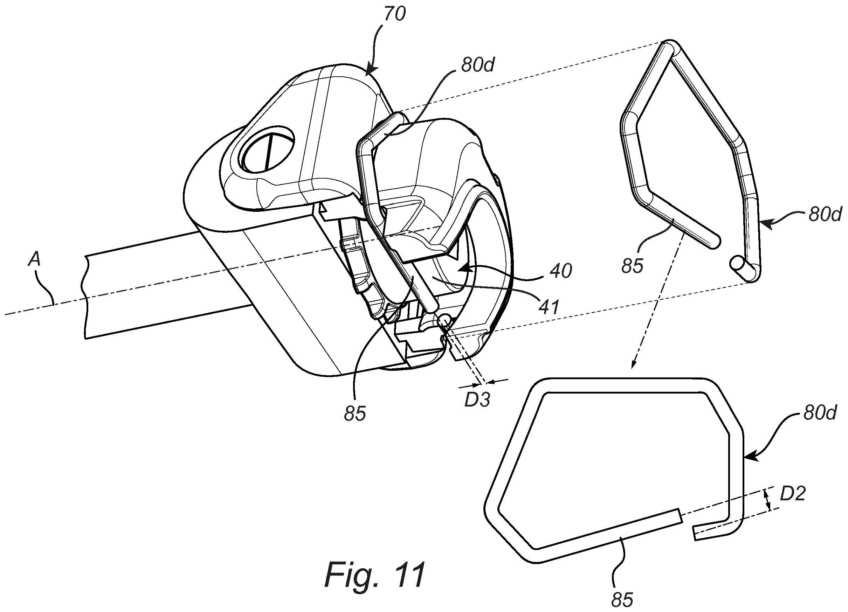

Fig. 11 shows the locking element 70 in Figs. 1-8, with an alternative pressing element 80d. It is a spring element 80d made of a metal wire. The spring element 80d surrounds the locking member 70 and the elongated adjusting member 40. One end 85, i.e. a portion, of the spring member 80d resiliently contacts and presses against the head 41 of the elongated adjusting member 40. The spring element 80d comprises two ends and the ends are arranged a first distance D2 from each other, where the end of the end portion 85 of the spring member 80d which resiliently contacts and presses against the head 41 is arranged closer to the area where the head 41 of the elongated adjusting member 40 is adapted to be arranged. The two ends are also arranged a second distance D3 from each other in a direction which is essentially parallel with the centre axis A of the elongated adjusting member 40. The spring element 80d has an angular shape which fits around the locking member 70 and the elongated adjusting member 40 and which together with the resilient portion 85 presses the locking member 70 and the elongated adjusting member 40 together into the locked position. When the locking member 70 and the elongated adjusting member 40 are in the open position, for example when a tool is inserted, the resilient portion 85 flex, and when the tool is removed the resilient portion 85 pushes the locking member 70 and the elongated adjusting member 40 back to the locked position.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A load carrier foot (1) for attaching a load carrier bar (11) to a vehicle (100), said load carrier foot (1) comprising a body (2) with a support surface (5) adapted to be positioned against a first surface (101) of the vehicle (100), a clamping member (3) adapted to clamp a second surface (102) of said vehicle (100) to enable a clamping force between said support surface (5) and said clamping member (3), an attachment arrangement (4) being operable to operate said clamping member (3) and thereby vary said clamping force between said support surface (5) and said clamping member (3), wherein said attachment arrangement (4) comprises
- an elongated adjusting member (40, 40'), which threadedly engages said body (2) or a member (60) arranged to said body at a first area (40a) of said elongated adjusting member (40, 40') and engages said clamping member (3) at a second area (40b) of said elongated adjusting member, and by rotating said elongated adjusting member (40, 40') said clamping force is varied, said elongated adjusting member (40, 40') comprising a first engagement portion (43, 43') arranged at said second area (40b), said first engagement portion (43, 43') being arranged at the periphery of said elongated adjusting member (40, 40'), and
- a locking member (70) comprising a second engagement portion (75, 75') matching said first engagement portion (43, 43') of said elongated adjusting member (40, 40'), wherein said second engagement portion (75, 75') of said locking member (70) and said first engagement portion (43, 43') of said elongated adjusting member (40, 40') are adapted to mate in a locked position, wherein said adjusting member (40, 40') is prevented from rotating, and
said second engagement portion (75, 75') of said locking member (70) and said first engagement portion (43, 43') of said elongated adjusting member (40, 40') are adapted to be separated in an open position, wherein said elongated adjusting member (40, 40') is rotatable **characterized in that** said locking member (70) is arranged at least partly around said second area (40b) of said adjusting member (40, 40') and its first engagement portion (43, 43') and **in that** said locking member (70) comprises a locking portion (73) comprising said second engagement portion (75), said locking portion (73) being adapted to partly surround the circumference of the first engagement portion (43, 43') of the elongated adjusting member (40, 40').

2. A load carrier foot (1) according to claim 1, wherein said attachment arrangement (4) further comprises a pressing member (80a, 80b, 80c, 80d), which is arranged to at least said locking member (70, 70'), said pressing member (90) is adapted to press said locking member (70) and said second engagement portion (75, 75') to mate with said first engagement portion (43, 43') of said elongated adjusting member (40, 40').

3. A load carrier foot (1) according to claim 2, wherein said pressing member (80a, 80b, 80c, 80d) is an elastic ring-shaped member (80a) arranged around said locking member (70, 70') and said elongated adjusting member (40, 40'), wherein said elastic ring-shaped member (80a) presses said second engagement portion (75, 75') of said locking member (70) and said first engagement portion (43, 43') of said elongated adjusting member (40, 40') to mate, and said elastic ring-shaped member (80a) is stretchable, and when being stretched it allows said second engagement portion (75, 75') of said locking member (70) and said first engagement portion (43, 43') of said elongated adjusting member (40, 40') to separate and to move to the open position wherein said elongated adjusting member (40, 40') is rotatable.

4. A load carrier foot (1) according to claim 2, wherein said pressing member (80a, 80b, 80c, 80d) is a spring member (80a, 80b, 80d) arranged at least partly around said locking member (70) and said elongated adjusting member (40, 40'), and a portion of said spring member is resiliently contacting said locking member (70) and/or said elongated adjusting member (40, 40).

5. A load carrier foot (1) according to any one of the preceding claims,
wherein said first engagement portion (43, 43') of said elongated adjusting member (40, 40') extends in an angle to a central axis (A) of said elongated adjusting member (40, 40').

6. A load carrier foot (1) according to any one of the preceding claims, wherein several first engagement portions (43, 43') are evenly distributed around the periphery of said elongated adjusting member (40, 40').

7. A load carrier foot (1) according to any one of the claims 1-6, wherein said first engagement portion (43) of said elongated adjusting member (40) comprises two engagement protrusions (49) forming a recess there between and said second engagement portion (75) of said locking member (70) is a protrusion (75) protruding from said locking member (70) and said protrusion (75) is adapted to be received in said recess.

8. A load carrier foot (1) according to any one of the claims 1-6, wherein said first engagement portion (43') of said elongated adjusting member (40') is at least one recess in said elongated adjusting member (40') and said second engagement portion (75) of said locking member is a protrusion (75) protruding from said locking member (70) and said protrusion (75) is adapted to be received in said recess.

9. A load carrier foot (1) according to any one of the claims 1-6, wherein said first engagement portion (43') of said elongated adjusting member (40, 40') is at least one engagement protrusion (49) and said second locking portion (75') of said locking member (70') is a recess in said locking member (70) and said engagement protrusion (49) is adapted to be received in said recess.

10. A load carrier foot (1) according to any one of the preceding claims said elongated adjusting member (40, 40') comprises a tool engaging area (48) at said second area (40b) of said elongated adjusting member (40, 40'), said first engagement portion (43, 43') is arranged adjacent said tool engaging area (48), and said tool engaging area (48) is arranged inside said locking member (70, 70') and at least partly covered by said locking member (70, 70'), and said locking member (70, 70') is adapted to move from said closed position to said open position when a tool (200), for adjusting said clamping force, is inserted into said tool engaging area (48), wherein said tool (200) pushes said locking member (70, 70') at least partly away from said elongated adjusting member (40, 40') into said open position.

11. A load carrier foot (1) according to any one of the claims 1-9, wherein said elongated adjusting member (40, 40') comprises a head (41, 41') with a tool engaging area (48) at said second area (40b) of said elongated adjusting member (40, 40'), said first engagement portion (43, 43') is arranged adjacent said head or is part of said head (41, 41), and said head (41, 41 ') and said tool engaging area (48) is arranged inside said locking member (70, 70') and at least partly covered by said locking member (70, 70'), and said locking member (70, 70') is adapted to move from said closed position to said open position when a tool (200), for adjusting said clamping force, is inserted into said tool engaging area (48), wherein said tool (200) pushes said locking member (70, 70') at least partly away from said elongated adjusting member (40, 40') into said open position.

12. A load carrier foot (1) according to any one of the preceding claims,
wherein said elongated adjusting member (40, 40') is a screw or a bolt.

13. A load carrier foot (1) according to any one of the preceding claims,
wherein said attachment arrangement (4) further comprises a pin member (50), said pin member (50) comprises a hole (59) through which said elongated adjusting member (40, 40') extends and said pin member (50) is arranged between said first engagement portion (43, 43') of said elongated adjusting member (40, 40') and said clamping member (3).

14. A load carrier foot (1) according to claim 13, wherein said locking member (70) is pivotably arranged to said pin member (50) by matching connecting elements (76, 51).

15. A load carrier foot (1) according to any one of the preceding claims,
wherein said locking member (70) comprises
- a tool receiving portion (71) adapted to partly cover a portion of said tool engaging area (48),
- optionally a pin member receiving portion (74), which is adapted to receive said pin member (50).

## Patentansprüche

1. Lastträgerfuß (1) zum Befestigen einer Lastträgerstange (11) an einem Fahrzeug (100), wobei der Lastträgerfuß (1) einen Körper (2) mit einer Stützfläche (5) umfasst, die dafür ausgelegt ist, gegen eine erste Fläche (101) des Fahrzeugs (100) positioniert zu werden, ein Klemmelement (3) ist dafür ausgelegt, eine zweite Fläche (102) des Fahrzeugs (100) einzuspannen, um eine Klemmkraft zwischen der Stützfläche (5) und dem Klemmelement (3) zu ermöglichen, wobei eine Befestigungsanordnung (4) dafür eingerichtet ist, das Klemmelement (3) zu betätigen und dadurch die Klemmkraft zwischen der Stützfläche (5) und dem Klemmelement (3) zu variieren,
wobei die Befestigungsanordnung (4) umfasst
- ein längliches Einstellelement (40, 40'), das mittels Gewinde in den Körper (2) oder ein Element (60) eingreift, das am Körper in einem ersten Bereich (40a) des länglichen Einstellelementes (40, 40') angeordnet ist und in das Klemmelement (3) in einem zweiten Bereich (40b) des länglichen Einstellelementes eingreift, und durch Rotieren des länglichen Einstellelementes (40, 40') wird die Klemmkraft variiert, wobei das längliche Einstellelement (40, 40') umfasst einen ersten Eingriffsteil (43, 43'), der am zweiten Bereich (40b) angeordnet ist, wobei der erste Eingriffsteil (43, 43') an der Peripherie des länglichen Einstellelementes (40, 40') angeordnet ist, und
- ein Verriegelungselement (70), das umfasst einen zweiten Eingriffsteil (75, 75'), der dem ersten Eingriffsteil (43, 43') des länglichen Einstellelementes (40, 40') entspricht, wobei der zweite Eingriffsteil (75, 75') des Verriegelungselementes (70) und der erste Eingriffsteil (43, 43') des länglichen Einstellelementes (40, 40') dafür ausgelegt sind, in einer verriegelten Position zusammenzupassen, wobei das Einstellelement (40, 40') an der Drehung gehindert wird, und der zweite Eingriffsteil (75, 75') des Verriegelungselementes (70) und der erste Eingriffsteil (43, 43') des länglichen Einstellelementes (40, 40') sind dafür ausgelegt, in einer offenen Position getrennt zu sein,
wobei das längliche Einstellelement (40, 40') drehbar ist, **dadurch gekennzeichnet, dass** das Verriegelungselement (70) zumindest teilweise rund um den zweiten Bereich (40b) des Einstellelementes (40, 40') und seinen ersten Eingriffsteil (43, 43') angeordnet ist, und dadurch, dass
das Verriegelungselement (70) einen Verriegelungsteil (73) umfasst, der den zweiten Eingriffsteil (75) enthält, wobei der Verriegelungsteil (73) dafür eingerichtet ist, den Umfang des ersten Eingriffsteils (43, 43') des länglichen Einstellelementes (40, 40') teilweise zu umschließen.

2. Lastträgerfuß (1) nach Anspruch 1, wobei die Befestigungsanordnung (4) ferner ein Druckelement (80a, 80b, 80c, 80d) umfasst, das zumindest an dem Verriegelungselement (70, 70') befestigt ist, wobei das Druckelement (90) dafür eingerichtet ist, das Verriegelungselement (70) und den zweiten Eingriffsteil (75, 75') mit dem ersten Eingriffsteil (43, 43') des länglichen Einstellungselementes (40, 40') zu verbinden.

3. Lastträgerfuß (1) nach Anspruch 2, wobei das Druckelement (80a, 80b, 80c, 80d) ein elastisches, ringförmiges Element (80a) ist, das rund um das Verriegelungselement (70, 70') und das längliche Einstellelement (40, 40') angeordnet ist, wobei das elastische, ringförmige Element (80a) den zweiten Eingriffsteil (75, 75') des Verriegelungselementes (70) und den ersten Eingriffsteil (43, 43') des länglichen Einstellungselementes (40, 40') zusammenpresst, und das elastische, ringförmige Element (80a) ist dehnbar, und wenn es gestreckt wird, ermöglicht es dem zweiten Eingriffselement (75, 75') des Verriegelungselementes (70) und des ersten Eingriffsteils (43, 43') des länglichen Einstellungselementes (40, 40'), sich zu trennen und in die offene Position zu bewegen, wobei das längliche Einstellungselement (40, 40') drehbar ist.

4. Lastträgerfuß (1) nach Anspruch 2, wobei das Druckelement (80a, 80b, 80c, 80d) ein Federelement (80a, 80b, 80d) ist, das zumindest teilweise rund um das Verriegelungselement (70) und das längliche Einstellelement (40, 40') angeordnet ist, und ein Teil des Federelementes kontaktiert elastisch das Verriegelungselement (70) und/oder das längliche Einstellelement (40, 40).

5. Lastträgerfuß (1) nach einem der vorherigen Ansprüche, wobei der erste Eingriffsteil (43, 43') des länglichen Einstellelementes (40, 40') sich in einem Winkel zu einer Mittelachse (A) des länglichen Einstellelementes (40, 40') erstreckt.

6. Lastträgerfuß (1) nach einem der vorherigen Ansprüche, wobei mehrere erste Eingriffsteile (43, 43') gleichmäßig rund um die Peripherie des länglichen Einstellelementes (40, 40') verteilt sind.

7. Lastträgerfuß (1) nach einem der Ansprüche 1 bis 6, wobei der erste Eingriffsteil (43) des länglichen Einstellelementes (40) zwei Eingriffsvorsprünge (49) umfasst, die eine Vertiefung dazwischen bilden, und der zweite Eingriffsteil (75) des Verriegelungselementes (70) ist ein Vorsprung (75), der vom Verriegelungselement (70) vorspringt, und der Vorsprung (75) ist dafür ausgelegt, in der Vertiefung aufgenommen zu werden.

8. Lastträgerfuß (1) nach einem der Ansprüche 1 bis 6, wobei der erste Eingriffsteil (43') des länglichen Einstellelementes (40') zumindest eine Vertiefung in dem länglichen Einstellelement (40') ist, und wobei der zweite Eingriffsteil (75) des Verriegelungselementes ein Vorsprung (75) ist, der von dem Verriegelungselement (70) vorspringt, und der Vorsprung (75) ist dafür eingerichtet, in der Vertiefung aufgenommen zu werden.

9. Lastträgerfuß (1) nach einem der Ansprüche 1 bis 6, wobei der erste Eingriffsteil (43') des länglichen Einstellelementes (40, 40') mindestens ein Eingriffsvorsprung (49) ist, und der zweite Verriegelungsteil (75') des Verriegelungselementes (70') ist eine Vertiefung im Verriegelungselement (70), und der Eingriffsvorsprung (49) ist dafür eingerichtet, in der Vertiefung aufgenommen zu werden.

10. Lastträgerfuß (1) nach einem der vorherigen Ansprüche, wobei das längliche Einstellelement (40, 40') einen Werkzeugeingriffsbereich (48) im zweiten Bereich (40b) des länglichen Einstellelementes (40, 40') umfasst, der erste Eingriffsteil (43, 43') ist angrenzend an den Werkzeugeingriffsbereich (48) angeordnet, und der Werkzeugeingriffsbereich (48) ist innerhalb des Verriegelungselementes (70, 70') angeordnet und zumindest teilweise vom Verriegelungselement (70, 70') bedeckt, und das Verriegelungselement (70, 70') ist dafür eingerichtet, sich von der geschlossenen Position in die offene Position zu bewegen, wenn ein Werkzeug (200) zum Einstellen der Klemmkraft in den Werkzeugeingriffsbereich (48) eingeführt wird, wobei das Werkzeug (200) das Verriegelungselement (70, 70') zumindest teilweise weg vom länglichen Einstellungselement (40, 40') in die offene Position drückt.

11. Lastträgerfuß (1) nach einem der Ansprüche 1 bis 9, wobei das längliche Einstellelement (40, 40') einen Kopf (41, 41') mit einem Werkzeugeingriffsbereich (48) im zweiten Bereich (40b) des länglichen Einstellelementes (40, 40') umfasst, der erste Eingriffsteil (43, 43') ist angrenzend an den Kopf angeordnet oder ist Teil des Kopfes (41, 41), und der Kopf (41, 41') und der Werkzeugeingriffsbereich (48) sind innerhalb des Verriegelungselementes (70, 70') angeordnet und werden zumindest teilweise durch das Verriegelungselement (70, 70') bedeckt, und das Verriegelungselement (70, 70') ist dafür eingerichtet, sich von der geschlossenen Position in die offene Position zu bewegen, wenn ein Werkzeug (200) zum Einstellen der Klemmkraft in den Werkzeugeingriffsbereich (48) eingeführt wird, wobei das Werkzeug (200) das Verriegelungselement (70, 70') zumindest teilweise weg vom länglichen Einstellelement (40, 40') in die offene Position drückt.

12. Lastträgerfuß (1) nach einem der vorherigen Ansprüche, wobei das längliche Einstellelement (40, 40') eine Schraube oder ein Bolzen ist.

13. Lastträgerfuß (1) nach einem der vorherigen Ansprüche, wobei die Befestigungsanordnung (4) ferner ein Stiftelement (50) umfasst, wobei das Stiftelement (50) ein Loch (59) enthält, durch welches sich das längliche Einstellelement (40, 40') erstreckt, und das Stiftelement (50) ist zwischen dem ersten Eingriffsteil (43, 43') des länglichen Einstellelementes (40, 40') und dem Klemmelement (3) angeordnet.

14. Lastträgerfuß (1) nach Anspruch 13, wobei das Verriegelungselement (70) schwenkbar am Stiftelement (50) durch dazu passende Verbindungselemente (76, 51) befestigt ist.

15. Lastträgerfuß (1) nach einem der vorherigen Ansprüche, wobei das Verriegelungselement (70) umfasst
- einen Werkzeugaufnahmeteil (71), der dafür eingerichtet ist, einen Teil des Werkzeugeingriffsbereiches (48) teilweise zu bedecken,
- optional einen Stiftelement aufnehmenden Teil (74), der dafür eingerichtet ist, das Stiftelement (50) aufzunehmen.

## Revendications

1. Pied de porte-charge (1) pour attacher une barre de porte-charge (11) à un véhicule (100), ledit pied de porte-charge (1) comprenant un corps (2) avec une surface de support (5) adaptée pour être positionnée contre une première surface (101) du véhicule (100), un élément de serrage (3) adapté pour serrer une seconde surface (102) dudit véhicule (100) pour permettre une force de serrage entre ladite surface de support (5) et ledit élément de serrage (3), un dispositif d'attachement (4) pouvant fonctionner pour faire fonctionner ledit élément de serrage (3) et ainsi faire varier ladite force de serrage entre ladite surface de support (5) et ledit élément de serrage (3),
où ledit dispositif d'attachement (4) comprend
- un élément d'ajustement allongé (40, 40'), qui engage par filetage ledit corps (2) ou un élément (60) disposé audit corps à une première surface (40a) dudit élément d'ajustement allongé (40, 40') et engage ledit élément de serrage (3) à une second surface (40b) dudit élément d'ajustement allongé (40, 40') et engage ledit élément de serrage (3) à une seconde surface (40b) dudit élément d'ajustement allongé, et en faisant tourner ledit élément d'ajustement allongé (40, 40') on fait varier ladite force de serrage, ledit élément d'ajustement allongé (40, 40') comprenant une première partie d'engagement (43, 43') disposé à ladite seconde surface (40b), ladite première partie d'engagement (43, 43') étant disposée à la périphérie dudit élément d'ajustement allongé (40, 40'), et
- un élément de verrouillage (70) comprenant une seconde partie d'engagement (75, 75') correspondant à ladite première partie d'engagement (43, 43') dudit élément d'ajustement allongé (40, 40'), où ladite seconde partie d'engagement (75, 75') dudit élément de verrouillage (70) et ladite première partie d'engagement (43, 43') dudit élément d'ajustement allongé (40, 40') sont adaptés pour s'apparier dans une position verrouillée, où ledit élément d'ajustement (40, 40') est empêché de tourner et
ladite seconde partie d'engagement (75, 75') dudit élément de verrouillage (70) et ladite première partie d'engagement (43, 43') dudit élément d'ajustement allongé (40, 40') sont adaptées pour être séparées dans une position ouverte, où ledit élément d'ajustement allongé (40, 40') peut tourner **caractérisé en ce que** ledit élément de verrouillage (70) est disposé au moins partiellement autour de ladite seconde surface (40b) dudit élément d'ajustement (40, 40') et sa première partie d'engagement (43, 43') et **en ce que**
ledit élément de verrouillage (70) comprend une partie de verrouillage (73) comprenant ladite seconde partie d'engagement (75), ladite partie de verrouillage (73) étant adaptée pour partiellement entourer la circonférence de la première partie d'engagement (43, 43') de l'élément d'ajustement allongé (40, 40').

2. Pied de porte-charge (1) selon la revendication 1, dans lequel ledit dispositif d'attachement (4) comprend en outre un élément de pression (80a, 80b, 80c, 80d), qui est disposé à au moins audit élément de verrouillage (70, 70'), ledit élément de pression (90) est adapté pour presser ledit élément de verrouillage (70) et ladite seconde partie d'engagement (75, 75') pour s'apparier avec ladite première partie d'engagement (43, 43') dudit élément d'ajustement allongé (40, 40').

3. Pied de porte-charge (1) selon la revendication 2, dans lequel ledit élément de pression (80a, 80b, 80c, 80d) est un élément en forme de cycle élastique (80a) disposé autour dudit élément de verrouillage (70, 70') et dudit élément d'ajustement allongé (40, 40'), où ledit élément en forme de cycle élastique (80a) presse ladite seconde partie d'engagement (75, 75') dudit élément de verrouillage (70) et ladite première partie d'engagement (43, 43') dudit élément d'ajustement allongé (40, 40') pour s'apparier, et ledit élément en forme de cycle élastique (80a) est étirable, et quand il est étiré il permet à la seconde partie d'engagement (75, 75') dudit élément de verrouillage (70) et à ladite première partie d'engagement (43, 43') dudit élément d'ajustement allongé (40, 40') de se séparer et de se déplacer à la position ouverte où ledit élément d'ajustement allongé (40, 40') peut tourner.

4. Pied de porte-charge (1) selon la revendication 2, dans lequel ledit élément de pression (80a, 80b, 80c, 80d) est un élément de ressort (80a, 80b, 80d) disposé au moins partiellement autour dudit élément de verrouillage (70) et dudit élément d'ajustement allongé (40, 40') et une partie dudit élément de ressort est en contact résilient avec ledit élément de verrouillage (70) et/ou ledit élément d'ajustement allongé (40 40').

5. Pied de porte-charge selon l'une quelconque des revendications précédentes, dans lequel ladite première partie d'engagement (43, 43') dudit élément d'ajustement allongé (40, 40') s'étend dans un angle à un axe central (A) dudit élément d'ajustement allongé (40, 40').

6. Pied de porte-charge selon l'une quelconque des revendications précédentes, dans lequel plusieurs premières parties d'engagement (43, 43') sont distribuées de manière uniforme autour de la périphérie dudit élément d'ajustement allongé (40, 40').

7. Pied de porte-charge selon l'une quelconque des revendications 1 à 6, dans lequel ladite première partie d'engagement (43) dudit élément d'ajustement allongé (40) comprend deux saillies d'engagement (49) formant un retrait entre les deux et ladite seconde partie d'engagement (75) dudit élément de verrouillage (70) est une saillie (75) saillante dudit élément de verrouillage (70) et ladite saillie (75) est adaptée pour être reçue dans ce retrait.

8. Pied de porte-charge selon l'une quelconque des revendications 1 à 6, dans lequel ladite première partie d'engagement (43') dudit élément d'ajustement allongé (40') est au moins un retrait dans ledit élément d'ajustement allongé (40') et ladite seconde partie d'engagement (75) dudit élément de verrouillage est une saillie (75) faisant saillie dudit élément de verrouillage (70) et ladite saillie (75) est adaptée pour être reçue dans ledit retrait.

9. Pied de porte-charge selon l'une quelconque des revendications 1 à 6, dans lequel ladite première partie d'engagement (43') dudit élément d'ajustement allongé (40, 40') est au moins une saillie d'engagement (49) et ladite seconde partie de verrouillage (75') dudit élément de verrouillage (70') est un retrait dans ledit élément de verrouillage (70) et ladite saillie d'engagement (49) est adaptée pour être reçue dans ledit retrait.

10. Pied de porte-charge selon l'une quelconque des revendications précédentes ledit élément d'ajustement allongé (40, 40') comprend une surface d'engagement d'outil (48) à ladite seconde surface (40b) dudit élément d'ajustement allongé (40, 40'), ladite première partie d'engagement (43, 43') est disposée adjacente à ladite surface d'engagement d'outil (48) et ladite surface d'engagement d'outil (48) est disposée à l'intérieur dudit élément de verrouillage (70, 70') et au moins partiellement recouverte par ledit élément de verrouillage (70, 70'), et ledit élément de verrouillage (70, 70') est adapté pour se déplacer de ladite position fermée à ladite position ouverte quand un outil (200), pour ajuster ladite force de serrage, est inséré dans ladite surface d'engagement d'outil (48), où ledit outil (200) pousse ledit élément de verrouillage (70, 70') au moins partiellement à l'écart dudit élément d'ajustement allongé (40, 40') dans ladite position ouverte.

11. Pied de porte-charge selon l'une quelconque des revendications 1 à 9, dans lequel ledit élément d'ajustement allongé (40, 40') comprend une tête (41, 41') avec une surface d'engagement d'outil (48) à ladite seconde surface (40b) dudit élément d'ajustement allongé (40, 40'), ladite première partie d'engagement (43, 43') est disposée adjacente à ladite tête ou est une partie de ladite tête (41, 41) et ladite tête (41, 41') et ladite surface d'engagement d'outil (48) est disposée à l'intérieur dudit élément de verrouillage (70, 70') et au moins partiellement recouverte par ledit élément de verrouillage (70 70'), et ledit élément de verrouillage (70, 70') est adapté pour se déplacer de ladite position fermée à ladite position ouverte quand un outil (200), pour ajuster ladite force de serrage, est inséré dans ladite surface d'engagement d'outil (48), où ledit outil (200) pousse ledit élément de verrouillage (70, 70') au moins partiellement à l'écart dudit élément d'ajustement allongé (40, 40') dans ladite position ouverte.

12. Pied de porte-charge selon l'une quelconque des revendications précédentes, dans lequel ledit élément d'ajustement allongé (40, 40') est une vis ou un verrou.

13. Pied de porte-charge (1) selon l'une quelconque des revendications précédentes, dans lequel ladite disposition d'attachement (4) comprend en outre un élément de broche (50), ledit élément de broche (50) comprend un trou (59) à travers lequel ledit élément d'ajustement allongé (40, 40') s'étend et ledit élément de broche (50) est disposé entre ladite première partie d'engagement (43, 43') dudit élément d'ajustement allongé (40, 40') et dudit élément de serrage (3).

14. Pied de porte -charge (1) selon la revendication 13, dans lequel ledit élément de verrouillage (70) est disposé de manière pivotable audit élément de broche (50) en faisant correspondre les éléments de connexion (76, 51).

15. Pied de porte-charge selon l'une quelconque des revendications précédentes dans lequel ledit élément de verrouillage (70) comprend
- une partie recevant un outil (71) adaptée pour recouvrir partiellement une partie de ladite surface d'engagement d'outil (48),
- éventuellement une partie recevant un élément de broche (74), qui est adaptée pour recevoir ledit élément de broche (50).
